# EUROPEAN PATENT APPLICATION

(11) **EP 4 825 606 A1**
(43) Date of publication of application: **21.10.2026**
(21) Application number: 24903180.8
(22) Date of filing: 11.06.2024
(51) Int. Cl.: B60C 7/00

(54) **TIRE SET AND TIRE WHEEL ASSEMBLY**

(30) Priority: 13.12.2023 JP 2023210584
(71) Applicant: BRIDGESTONE CORPORATION, Chuo-ku Tokyo 104-8340 (JP)
(72) Inventor: SATO, Hiroshi, Tokyo 104-8340 (JP); TANIGUCHI, Yoshihiro, Tokyo 104-8340 (JP)
(74) Representative: Marks & Clerk LLP
(86) International application number: PCT/JP2024/021230
(87) International publication number: WO 2025/126516

(57) **Abstract**

The tire set is a set of tires including a plurality of non-pneumatic tires. All of the non-pneumatic tires constituting the tire set are configured to be mounted on a single wheel. A sectional width of at least one of the plurality of non-pneumatic tires is 75 mm or less (or, a ratio of a sectional width w of at least one of the plurality of non-pneumatic tires to a total sectional width W of all of the non-pneumatic tires is 0.5 or less). The total of the sectional widths of all of the non-pneumatic tires is 100 mm or more. The tire-wheel assembly is a tire-wheel assembly comprising the tire set assembled to a rim portion of the wheel. All of the non-pneumatic tires are arranged side by side in a width direction and assembled to the rim portion. A space is provided between adjacent non-pneumatic tires in the width direction.

## Description

### TECHNICAL FIELD

The present disclosure relates to a tire set comprising non-pneumatic tires and to a tire-wheel assembly comprising the non-pneumatic tire set and a wheel.

### BACKGROUND

Conventionally, a non-pneumatic tire (for example, see PTL 1) is known, which includes: a mounting body attached to an axle; an inner cylinder body externally fitted to the mounting body; an outer cylinder body that surrounds the inner cylinder body from the tire radial direction outer side; a ring member comprising these components; and a connecting member that is disposed between the inner cylinder body and the outer cylinder body along the tire circumferential direction in a plurality of locations, and connects the two cylinder bodies to each other.

Conventionally, in non-pneumatic tires, the width and other parameters of the connecting member have been adjusted so as to achieve a vertical spring characteristic comparable to that of pneumatic tires.

### CITATION LIST

### Patent Literature

PTL 1: JP 2008-55928 A

### SUMMARY

### (Technical Problem)

On the other hand, the connecting member is plate-shaped, and its rigidity in the lateral direction (tire width direction of the non-pneumatic tire) is higher than that of pneumatic tires.

When the rigidity in the lateral direction is high, ride comfort and NV performance (performance against noise and vibration) deteriorate.

Therefore, the present disclosure aims to provide a tire set comprising non-pneumatic tires and a tire-wheel assembly, which can reduce rigidity in the lateral direction and improve ride comfort and NV performance.

### (Solution to Problem)

The gist of the present disclosure is as follows.
(1) A tire set comprising a plurality of non-pneumatic tires,
   wherein all of the non-pneumatic tires constituting the tire set are configured to be mounted on a single wheel,
   wherein a sectional width of at least one of the plurality of non-pneumatic tires is 75 mm or less,
   and wherein a total of the sectional widths of all of the non-pneumatic tires is 100 mm or more.
(2) A tire set comprising a plurality of non-pneumatic tires,
   wherein all of the non-pneumatic tires constituting the tire set are configured to be mounted on a single wheel,
   wherein a ratio of a sectional width w of at least one of the plurality of non-pneumatic tires to a total sectional width W of all of the non-pneumatic tires is 0.5 or less,
   and wherein a total of the sectional widths of all of the non-pneumatic tires is 100 mm or more.

A tire-wheel assembly comprising the non-pneumatic tire set according to (1) or (2) assembled to a rim portion of a wheel,
wherein a plurality of the non-pneumatic tires are arranged side by side in a width direction and assembled to the rim portion,
and wherein a space is provided between adjacent non-pneumatic tires in the width direction.

### (Advantageous Effect)

According to the present disclosure, it is possible to provide a tire set comprising non-pneumatic tires and a tire-wheel assembly, which can reduce rigidity in the lateral direction and improve ride comfort and NV performance.

### BRIEF DESCRIPTION OF THE DRAWINGS

In the accompanying drawings:
FIG. 1 is a side view illustrating the structure of a non-pneumatic tire constituting a non-pneumatic tire set according to one embodiment of the present disclosure;
FIG. 2A is a schematic diagram depicting a conventional non-pneumatic tire;
FIG. 2B is a schematic diagram depicting a non-pneumatic tire set according to one embodiment of the present disclosure;
FIG. 3 is a cross-sectional view when two non-pneumatic tires are arranged side by side in the width direction;
FIG. 4 is a perspective view when two non-pneumatic tires are arranged side by side in the width direction;
FIG. 5 is a schematic cross-sectional view illustrating a principal part of a tire-wheel assembly according to one embodiment of the present disclosure;
FIG. 6 is a schematic cross-sectional view illustrating a principal part of a tire-wheel assembly according to another example;
FIG. 7 is a schematic cross-sectional view illustrating a principal part of a tire-wheel assembly according to a further example;
FIG. 8 is a cross-sectional view illustrating a principal part of the tire-wheel assembly of FIG. 6;
FIG. 9 is a perspective view illustrating a principal part of the tire-wheel assembly of FIG. 6;
FIG. 10 is a cross-sectional view illustrating a principal part of the tire-wheel assembly of FIG. 7; and
FIG. 11 is a perspective view illustrating a principal part of the tire-wheel assembly of FIG. 7.

Hereinafter, embodiments of the present disclosure will be exemplified and described in detail with reference to the drawings.

### (Non-pneumatic Tire Set)

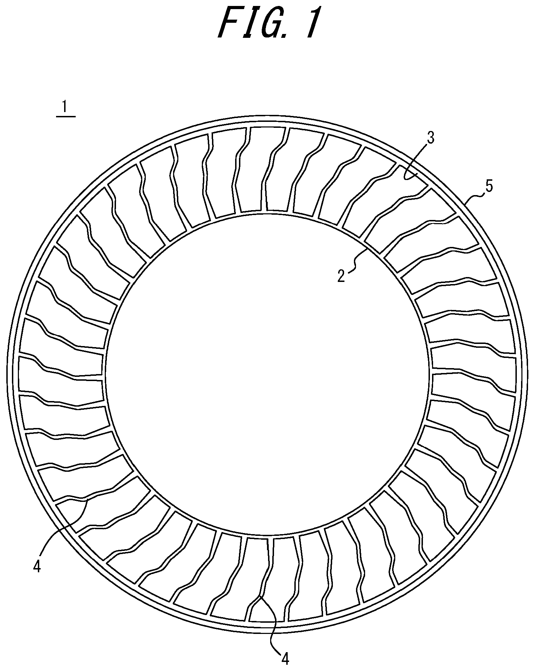

FIG. 1 is a side view illustrating the structure of a non-pneumatic tire (hereinafter, the "non-pneumatic tire" may also be simply referred to as "tire," and the "non-pneumatic tire set" may also be simply referred to as "tire set") constituting a non-pneumatic tire set according to one embodiment of the present disclosure. As illustrated in FIG. 1, this tire 1 includes: an inner cylinder 2; an outer cylinder 3 that surrounds the inner cylinder 2 from the tire radial direction outer side; an elastically deformable connecting member 4 that connects the inner cylinder 2 and the outer cylinder 3 to each other; and a tread 5 disposed on the radial direction outer side of the outer cylinder 3.

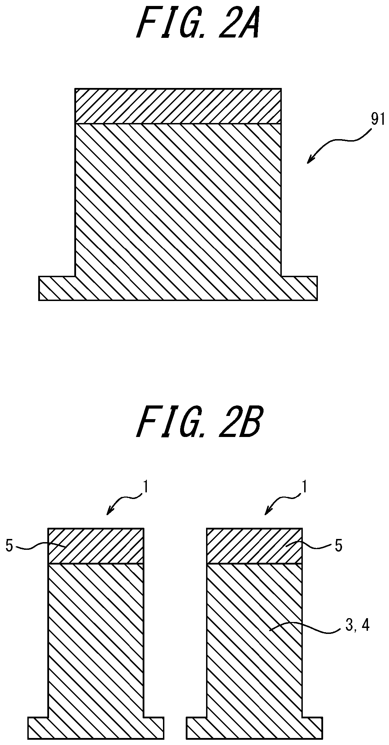

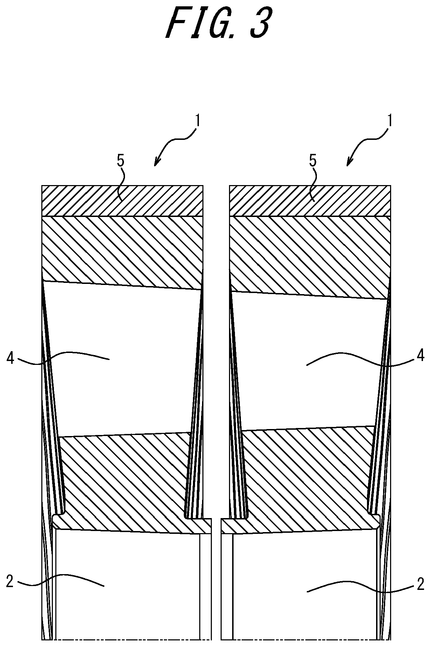

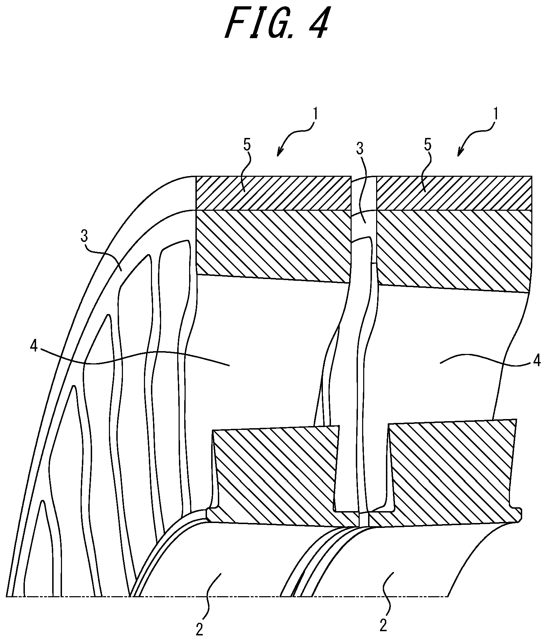

FIG. 2A is a schematic diagram depicting a conventional non-pneumatic tire. As described above, the conventional non-pneumatic tire 91 had high side rigidity. FIG. 2B is a schematic diagram illustrating a non-pneumatic tire set according to one embodiment of the present disclosure. FIG. 3 is a cross-sectional view when two non-pneumatic tires are arranged side by side in the width direction, and FIG. 4 is a perspective view when two non-pneumatic tires are arranged side by side in the width direction.

The non-pneumatic tire set of the present embodiment consists of a set comprising a plurality (two in the illustrated example) of non-pneumatic tires 1. The number of tires 1 constituting one set of the tire set may be three or more. As will be described later, all of the non-pneumatic tires 1 constituting the tire set are configured to be mounted on a single wheel 10.

In the present embodiment, the sectional width (maximum width as viewed in a cross-section in the tire width direction) of at least one of the plurality of non-pneumatic tires 1 constituting one set of the tire set is 75 mm or less. It is also possible for the sectional widths of two or more of the plurality of non-pneumatic tires 1 to be 75 mm or less, and it is also possible for the sectional widths of all of the plurality of non-pneumatic tires 1 to be 75 mm or less. On the other hand, it is preferable that the sectional width of at least one of the plurality of non-pneumatic tires 1 is 20 mm or more. It is preferable that the ratio of the sectional width w of at least one of the plurality of non-pneumatic tires to the total sectional width W of all of the non-pneumatic tires is 0.2 or more and 0.5 or less.

In the present embodiment, the total of the sectional widths of all of the non-pneumatic tires 1 constituting one set of the tire set is 100 mm or more. It is more preferable that the total of the sectional widths of all of the non-pneumatic tires 1 constituting one set of the tire set is 120 mm or more. On the other hand, it is preferable that the total of the sectional widths of all of the non-pneumatic tires 1 constituting one set of the tire set is 150 mm or less.

The outer diameter of the non-pneumatic tire 1 is not particularly limited, but may be, for example, 505 mm to 565 mm. The non-pneumatic tire of the present disclosure is suitably used as a non-pneumatic tire for passenger vehicles, particularly for applications such as small mobility vehicles.

### (Tire-Wheel Assembly)

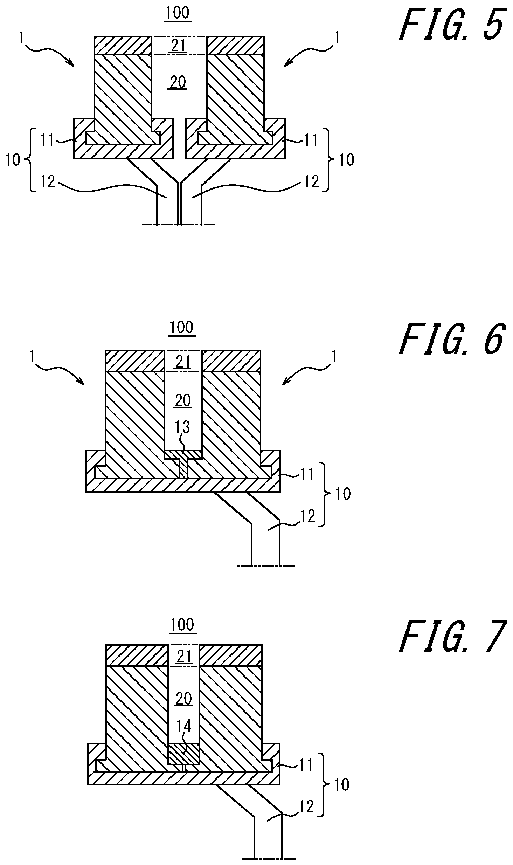

FIG. 5 is a schematic cross-sectional view illustrating a principal part of a tire-wheel assembly according to one embodiment of the present disclosure. FIG. 6 is a schematic cross-sectional view illustrating a principal part of a tire-wheel assembly according to another example. FIG. 7 is a schematic cross-sectional view illustrating a principal part of a tire-wheel assembly according to yet another example.

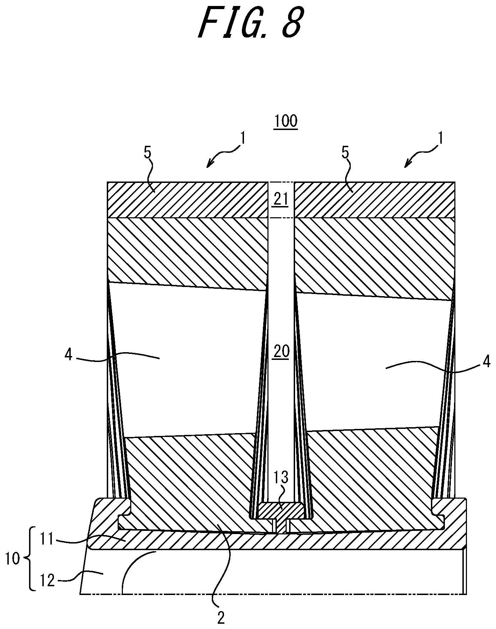

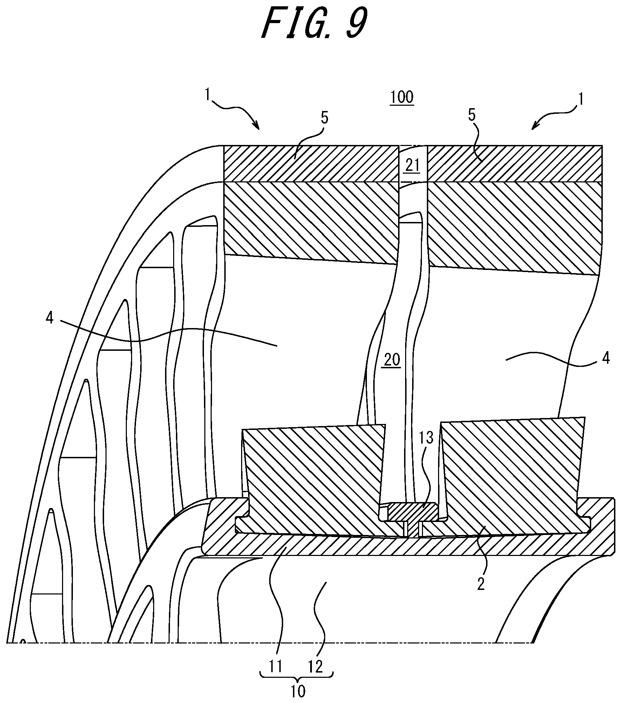

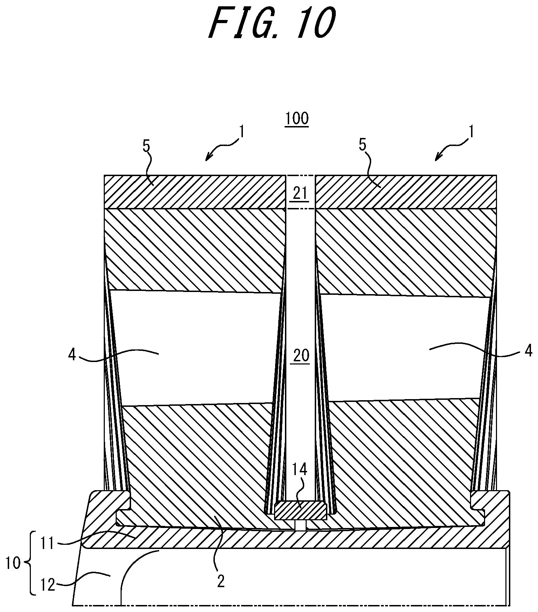

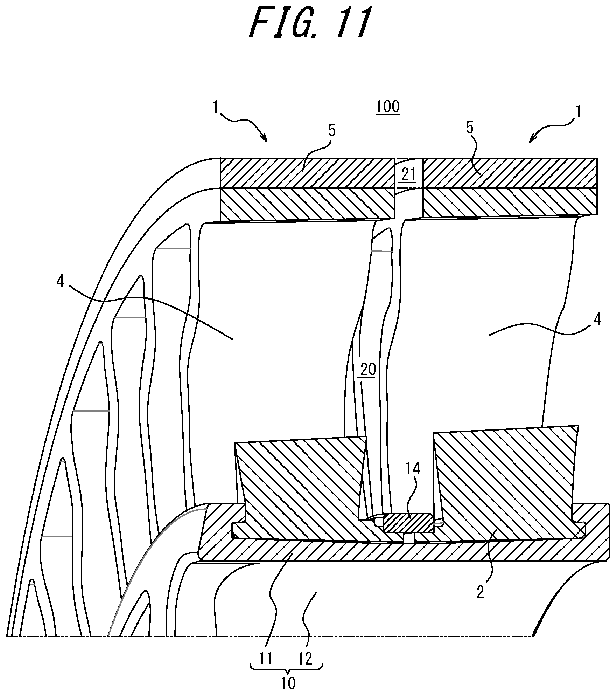

FIG. 8 is a cross-sectional view illustrating a principal part of the tire-wheel assembly of FIG. 6, and FIG. 9 is a perspective view illustrating a principal part of the tire-wheel assembly of FIG. 6. FIG. 10 is a cross-sectional view illustrating a principal part of the tire-wheel assembly of FIG. 7, and FIG. 11 is a perspective view illustrating a principal part of the tire-wheel assembly of FIG. 7.

As illustrated in FIGS. 5 to 11, the tire-wheel assembly 100 of the present embodiment is formed by assembling the above-described tire set of the embodiment to the rim portion 11 of the wheel 10. That is, all (two in the illustrated example) of the non-pneumatic tires 1 constituting the tire set are arranged side by side in the width direction and assembled to the rim portion 11. A space 20 is provided between adjacent non-pneumatic tires 1 in the width direction.

In the illustrated example, the space 20 extends continuously in the radial direction. Further, as illustrated in FIGS. 3 and 4, the space 20 may extend so as to gradually increase from the radial direction outer side toward the inner side.

In the examples of FIGS. 3 and 4, the connecting member 4 has a reverse trapezoidal shape in a cross-sectional view in the width direction. Here, the "reverse" in "reverse trapezoidal" means that, as illustrated, when the radial direction outer side is taken as the upper side, the upper side is longer than the lower side. However, in the present disclosure, the cross-sectional shape of the connecting member 4 may be various shapes and is not limited to this example.

As illustrated in FIGS. 5 to 11, this tire-wheel assembly has a gap portion 21 between the treads 5 of the adjacent non-pneumatic tires 1 in the width direction. In the illustrated example, since the space 20 extends to the position of the tread 5, the gap portion 21 and the space 20 are integrated. The width of the gap portion 21 is not particularly limited, but may be, for example, 8 mm to 12 mm. It is preferable that the depth of the space formed by the integration of the space 20 and the gap portion 21 is about the same as the radial length of the connecting member 4; for example, in the case of applications such as small mobility vehicles, it is not particularly limited but may be, for example, 80 mm to 120 mm. Since the space 20 and the gap portion 21 function as grooves of the tread 5, the space 20 and the gap portion 21 having such a depth (for example, deeper than that of pneumatic tires) can improve the drainage performance of the tire.

In the present embodiment, the connecting members 4 of the adjacent non-pneumatic tires 1 in the width direction are arranged with a phase difference in the circumferential direction. In other words, in a state where the non-pneumatic tires 1 are arranged side by side in the width direction, when viewed from the axial direction (width direction), the connecting member 4 of the front non-pneumatic tire 1 is positioned between the two connecting members 4 of the rear non-pneumatic tire 1 in the circumferential direction.

FIG. 5 illustrates an example of a plural wheel structure. In this example, the wheel 10 has a plurality (two in the illustrated example) of rim portions 11 divided in the width direction, and a plurality (two in the illustrated example) of disks 12 divided in the width direction. The divided disks 12 are mounted to the axle in a state of being in close contact with each other. The plurality of non-pneumatic tires 1 is mounted on the plurality of rim portions 11.

FIGS. 6 to 11 illustrate examples of a double tire structure (however, since the number of non-pneumatic tires 1 may be three or more, it is not limited to "double"). In these examples, some of the adjacent non-pneumatic tires 1 in the width direction are fixed to each other by fixing members 13 and 14. The plurality of fixed non-pneumatic tires 1 are mounted on (a single) rim portion 11. In the illustrated example, the fixing members 13 and 14 are insert rings. The insert rings are not particularly limited, but may be made of stainless steel or aluminum.

In the examples illustrated in FIGS. 6, 8, and 9, the insert ring has a T-shaped cross-section.

In the examples illustrated in FIGS. 7, 10, and 11, the insert ring has an I-shaped cross-section.

Hereinafter, the effects and advantages of the non-pneumatic tire set and the tire-wheel assembly of the present embodiment will be described.

First, regarding the tire set, the tire set of the present embodiment is a set of tires comprising a plurality of non-pneumatic tires 1, all of the non-pneumatic tires 1 constituting the tire set are configured to be mounted on a single wheel 10, the sectional width of at least one of the plurality of non-pneumatic tires 1 is 75 mm or less, and the total of the sectional widths of all of the non-pneumatic tires 1 is 100 mm or more.

In this way, by mounting all of the non-pneumatic tires 1, the total of whose sectional widths is 100 mm or more, on a single wheel 10, a structure suitable for supporting a predetermined load, such as that of a passenger vehicle, is provided.

On the other hand, by using a set comprising a plurality of non-pneumatic tires 1 in which the sectional width of at least one non-pneumatic tire 1 is 75 mm or less, rather than using only one non-pneumatic tire with a large sectional width, it is possible to reduce the overall side rigidity (of the plurality of non-pneumatic tires 1) compared to the case where only one non-pneumatic tire with a large sectional width is used, and ride comfort and NV (noise and vibration) performance can be improved. In this case, durability and steering stability are hardly reduced.

As described above, according to the tire set of the present embodiment, when all of the non-pneumatic tires 1 constituting the tire set are mounted on a single wheel 10 and used, side rigidity in the lateral direction can be reduced, and ride comfort and NV performance can be improved.

Next, the tire-wheel assembly 100 of the present embodiment is formed by assembling the above-described tire set of the embodiment to the rim portion 11 of the wheel 10, all of the non-pneumatic tires 1 are arranged side by side in the width direction and assembled to the rim portion 11, and a space 20 is provided between adjacent non-pneumatic tires 1 in the width direction. According to the tire-wheel assembly 100 of the present embodiment, as described above for the effects and advantages of the tire set, by using a set of non-pneumatic tires 1 in which the sectional width of at least one non-pneumatic tire 1 is 75 mm or less, and by providing a space 20 between adjacent non-pneumatic tires 1 in the width direction, it is possible to reduce the overall side rigidity (of the plurality of non-pneumatic tires 1) and improve ride comfort and NV performance. In this case, durability and steering stability are hardly reduced. Further, as described above, it is also a structure suitable for supporting a predetermined load, such as that of a passenger vehicle.

As described above, according to the tire-wheel assembly of the present embodiment, side rigidity in the lateral direction can be reduced, and ride comfort and NV performance can be improved.

Here, in the tire-wheel assembly, it is preferable that the space 20 extends continuously in the radial direction. This is to more reliably achieve the effect of reducing side rigidity.

Further, in the tire-wheel assembly, it is preferable that the space 20 gradually increases from the radial direction outer side toward the inner side. This is because it is possible to secure the footprint area by making the width on the tread side wider than on the rim side. Further, in a cross-sectional view in the width direction, it is preferable that the connecting member 4 has a reverse trapezoidal shape. This is because it is possible to secure the footprint area by making the width on the tread side wider than on the rim side.

Further, in the tire-wheel assembly, it is preferable that a gap portion 21 is provided between the treads 5 of the adjacent non-pneumatic tires 1 in the width direction. This is because drainage performance can be improved.

Further, in the tire-wheel assembly, it is preferable that the connecting members 4 of the adjacent non-pneumatic tires 1 in the width direction are arranged with a phase difference in the circumferential direction. This is because, by canceling out axial force fluctuations caused by the connecting members 4 between the adjacent non-pneumatic tires 1 in the width direction, NV performance can be further improved.

Further, in the tire-wheel assembly, it is preferable that the wheel 10 has a plurality of rim portions 11 divided in the width direction, and the plurality of non-pneumatic tires 1 is mounted on the plurality of rim portions 11, thereby forming a plural wheel structure. Alternatively, it is also preferable to adopt a structure in which some of the adjacent non-pneumatic tires 1 in the width direction are fixed to each other by fixing members 13 and 14 and mounted on a single rim portion 11 (in the case of two non-pneumatic tires 1, a double tire structure).

Although the embodiments of the present disclosure have been described above, the present disclosure is not limited to the above embodiments in any way. For example, in the above embodiment, the sectional widths of the non-pneumatic tires 1 constituting one set of the tire set were the same, but they may be different. In this case, it is advantageous for steering stability and the like to position the non-pneumatic tire 1 with the larger sectional width on the vehicle-mounted outer side, but it is also possible to position the non-pneumatic tire 1 with the larger sectional width on the vehicle-mounted inner side. In addition, various modifications and changes are possible.

In another embodiment, a set of tires comprising a plurality of non-pneumatic tires, all of the non-pneumatic tires constituting the tire set are configured to be mounted on a single wheel, and the ratio of the sectional width w of at least one of the plurality of non-pneumatic tires to the total sectional width W of all of the non-pneumatic tires is 0.5 or less, and the total of the sectional widths of all of the non-pneumatic tires is 100 mm or more.

Also in another embodiment, by using a set in which the ratio of the sectional width w of at least one of the plurality of non-pneumatic tires is 0.5 or less, it is possible to reduce the overall side rigidity (of the plurality of non-pneumatic tires 1) compared to the case where only one non-pneumatic tire with a large sectional width is used, and ride comfort and NV performance can be improved. Further, since the total of the sectional widths of all of the non-pneumatic tires is 100 mm or more, by mounting all of the non-pneumatic tires 1, the total of whose sectional widths is 100 mm or more, on a single wheel 10, a structure suitable for supporting a predetermined load, such as that of a passenger vehicle, is provided.

On the other hand, it is preferable that the above ratio is 0.2 or more.

In another embodiment, it is preferable that the sectional width (maximum width as viewed in a cross-section in the tire width direction) of at least one of the plurality of non-pneumatic tires 1 constituting one set of the tire set is 75 mm or less. It is also possible for the sectional widths of two or more of the plurality of non-pneumatic tires 1 to be 75 mm or less, and it is also possible for the sectional widths of all of the plurality of non-pneumatic tires 1 to be 75 mm or less. On the other hand, it is preferable that the sectional width of at least one of the plurality of non-pneumatic tires 1 is 20 mm or more.

Also in another embodiment, the total of the sectional widths of all of the non-pneumatic tires 1 constituting one set of the tire set is 100 mm or more. It is more preferable that the total of the sectional widths of all of the non-pneumatic tires 1 constituting one set of the tire set is 120 mm or more. On the other hand, it is preferable that the total of the sectional widths of all of the non-pneumatic tires 1 constituting one set of the tire set is 150 mm or less.

Also in another embodiment, the outer diameter of the non-pneumatic tire 1 is not particularly limited, but may be, for example, 505 mm to 565 mm. The non-pneumatic tire of the present disclosure is suitably used as a non-pneumatic tire for passenger vehicles, particularly for applications such as small mobility vehicles.

The tire-wheel assembly of the present disclosure can be formed by assembling the above-described other embodiment of the non-pneumatic tire set to the rim portion of the wheel. The configuration of the tire-wheel assembly when the tire set of another embodiment is assembled, such as the space, gap portion, fixing member, and the like, can be the same as in the above-described embodiment.

### REFERENCE SIGNS LIST

1: non-pneumatic tire
2: inner cylinder
3: outer cylinder
4: connecting member
5: tread
10: wheel
11: rim portion
12: disk
13: fixing member
14: fixing member
20: space
21: gap portion
91: non-pneumatic tire
100: tire-wheel assembly

## Claims

1. A set of tires comprising a plurality of non-pneumatic tires,
wherein all of the non-pneumatic tires constituting the tire set are configured to be mounted on a single wheel,
wherein a sectional width of at least one of the plurality of non-pneumatic tires is 75 mm or less,
and wherein a total of the sectional widths of all of the non-pneumatic tires is 100 mm or more.

2. A set of tires comprising a plurality of non-pneumatic tires,
wherein all of the non-pneumatic tires constituting the tire set are configured to be mounted on a single wheel,
wherein a ratio of a sectional width w of at least one of the plurality of non-pneumatic tires to a total sectional width W of all of the non-pneumatic tires is 0.5 or less,
and wherein a total of the sectional widths of all of the non-pneumatic tires is 100 mm or more.

3. The set of tires according to claim 1 or 2,
wherein the non-pneumatic tire comprises an inner cylinder, an outer cylinder that surrounds the inner cylinder from a tire radial direction outer side, an elastically deformable connecting member that connects the inner cylinder and the outer cylinder to each other, and a tread disposed on a radial direction outer side of the outer cylinder.

4. A tire-wheel assembly comprising the set of tires according to claim 1 or 2 assembled to a rim portion of the wheel,
wherein all of the non-pneumatic tires are arranged side by side in a width direction and assembled to the rim portion,
and wherein a space is provided between adjacent non-pneumatic tires in the width direction.

5. A tire-wheel assembly comprising the set of tires according to claim 3 assembled to a rim portion of the wheel,
wherein all of the non-pneumatic tires are arranged side by side in a width direction and assembled to the rim portion,
and wherein a space is provided between adjacent non-pneumatic tires in the width direction.

6. The tire-wheel assembly according to claim 4 or 5, wherein the space extends continuously in a radial direction.

7. The tire-wheel assembly according to claim 6, wherein the space gradually increases from an outer side toward an inner side in the radial direction.

8. The tire-wheel assembly according to claim 5, or the tire-wheel assembly according to claim 6 or 7, which is dependent on claim 5, wherein the connecting member has a reverse trapezoidal shape in a cross-sectional view in the width direction.

9. The tire-wheel assembly according to claim 4, wherein a gap portion is provided between the treads of the adjacent non-pneumatic tires in the width direction.

10. The tire-wheel assembly according to claim 5, or the tire-wheel assembly according to any one of claims 6 to 9, which is dependent on claim 5, wherein the connecting members of the adjacent non-pneumatic tires in the width direction are arranged with a phase difference in a circumferential direction.

11. The tire-wheel assembly according to any one of claims 4 to 10, wherein the wheel has a plurality of rim portions divided in the width direction,
and the plurality of non-pneumatic tires is mounted on the plurality of rim portions, thereby forming a plural wheel structure.

12. The tire-wheel assembly according to any one of claims 4 to 10, wherein a part of the adjacent non-pneumatic tires in the width direction are fixed to each other by a fixing member.

13. The tire-wheel assembly according to claim 12, wherein the fixing member is an insert ring.
